# EUROPEAN PATENT SPECIFICATION

(11) **EP 3 262 562 B1**
(45) Date of publication and mention of the grant of the patent: **19.10.2022**
(21) Application number: 16707406.1
(22) Date of filing: 23.02.2016
(51) Int. Cl.: G06V 20/52, G07G 1/00

(54) **SYSTEM AND METHOD FOR THE IDENTIFICATION OF PRODUCTS IN A SHOPPING CART**
SYSTEM UND VERFAHREN ZUR IDENTIFIZIERUNG VON PRODUKTEN IN EINEM EINKAUFSWAGEN
SYSTÈME ET PROCÉDÉ PERMETTANT L'IDENTIFICATION DE PRODUITS DANS UN PANIER D'ACHAT

(30) Priority: 23.02.2015 DE 102015102550; 29.04.2015 DE 102015106659
(43) Date of publication of application: 03.01.2018
(73) Proprietor: Pentland Firth Software GmbH, 81379 München (DE)
(72) Inventor: HEINRICH, Frank, 82049 Pullach (DE)
(74) Representative: Zimmermann & Partner Patentanwälte mbB
(86) International application number: PCT/EP2016/053777
(87) International publication number: WO 2016/135142

(56) References cited:
- WO-A1-2013/033442
- KR-A- 20100 029 364
- US-A1- 2005 189 411
- US-A1- 2008 011 836
- US-A1- 2008 296 392
- US-A1- 2012 310 744

## Description

### TECHNICAL BACKGROUND

The subject matter described herein relates generally to systems, methods, and computer-readable media for the identification of products in a shopping cart in a retail environment, such as a super market. Particularly, it relates to systems, methods, and computer-readable media for the identification of products by optical image recognition and comparison with a database comprising product specific data, and to an automated checkout of a customer in a shopping environment.

Automation has greatly increased the efficiency of retail checkout operations over the years. Employee operated checkout operations have gained greatly in efficiency, while self-checkout operations have also become possible, providing for significant labor savings for merchants and increased convenience for customers choosing to use self-checkout. However, known self-checkout systems still have significant drawbacks which have hindered their success as a general method of checkout in retail environments.

Some years ago, great expectations were put into RFID-based systems. However, especially in the food retail segment, this method has proven too costly and also impractical for businesses in view of the often low-priced articles in a typical assortment of products in a typical super market, which is partly due to the costs of the required RFID labels, and also to the significant additional handling effort in product preparation.

In some super markets, self-check-out terminals have been established where customers have to move their chosen products along a central barcode scanner at the point of checkout. In view of the fact that a barcode is at times difficult to identify on a product with a colorful appearance, for example, and that elderly or physically handicapped customers may tend to generally have a problem with such procedures, this has at large not proven very successful. In a similar method, a dedicated barcode scanner is mounted directly on each shopping cart, so that customers have to move the products along the scanner before adding them to the cart while shopping. While this may cause similar problems as described above, it also significantly alters and also complicates the customer's shopping experience, thus businesses may thereby run the risk of losing customers. Also, in the case that a barcode cannot be scanned by a customer for some reason, an employee has to intervene and at times also to manually enter the product identification number, which can contribute on a broad scale to at least partly diminish the intended positive economic effect of such systems.

Another proposed system is based on the automated recognition or identification of products by image recognition. This is based on comparing images obtained from the chosen products with pre-stored images of the assortment of products in a database. However, a comprehensive and reliable comparison of a product image against the large number of products, such as 30,000 to 100,000 items that might be carried by a large retailer, typically requires more time than would be acceptable for a customer or for the merchant. On the other hand, shorter, more acceptable time spans would tend to render the efficiency and accurateness of the recognition process too low for practical use, because for the method to be ready for productive use, the recognition accuracy should be at least 99 % or more - so that a mis-recognition would occur on average only for a fraction of the customers. Further questions involved pertain to the question of how the images can be taken during the shopping process to yield a sufficient quality for the method, and how this may be combined or integrated with the well-known and expected shopping experience of the customer.

For the reasons cited above and for other reasons, there is a need for the present invention.

Relevant prior art documents are:
WO 2013/033442 A1 (DIGIMARC CORP [US]; DAVIS BRUCE L [US]; LORD JOHN D [US];
BAI YANG [US) 7 March 2013 (2013-03-07); and,
US 2012/310744 A1 (KIM UNIYOUNG [KR] ET AL) 6 December 2012 (2012-12-06).

### BRIEF DESCRIPTION OF THE INVENTION

In view of the above, a system according to claim 1, and a method according to claim 10 are provided.

In one aspect, a system for the identification of products in a shopping cart in a retail environment is provided in claim 1.

In a further aspect, a method for the identification of products in a shopping cart in a retail environment is provided in claim 8.

This Summary is provided to introduce a selection of concepts in a simplified form that are further described below in the Detailed Description.

Further aspects, advantages and features of the present invention are apparent from the dependent claims, the description and the accompanying drawings.

### BRIEF DESCRIPTION OF THE DRAWINGS

A full and enabling disclosure including the best mode thereof, to one of ordinary skill in the art, is set forth more particularly in the remainder of the specification, including reference to the accompanying figures wherein:
Fig. 1 is a schematic view of a system according to embodiments;
Fig. 2 is a schematic view of a system according to further embodiments;
Fig. 3 is a schematic view of a method according to embodiments;
Fig. 4 shows details of a system according to embodiments;
Fig. 5 shows a cross-sectional view of details of a system according to embodiments;
Fig. 6 shows details of a system applied to a shopping cart, according to further embodiments.

### DETAILED DESCRIPTION

Reference will now be made in detail to the various aspects and embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations. The subject matter of the present invention is described with specificity herein to meet statutory requirements. However, the description itself is not intended to limit the scope of this patent.

### Description of General Aspects

Embodiments described herein provide a system and method which serve for reliably identifying products inserted into a shopping cart by a customer in a retail environment, such as a super market. The products are automatically identified during the shopping process, ideally, but not necessarily almost in real time, and the prices and numbers of each product are so determined. Consequently, the checkout may be carried out fully automatic. That is, the customer can for example pay at a cashier - with or without interaction with a human employee - with cash or a credit card or debit card and may receive a printed bill from, e.g., an automated checkout teller. In another scenario, the customer leaves the shop without any interaction, while his smartphone or tablet computer is automatically used for a wireless payment process, for example over NFC via a mobile app. Also, the customer may receive the bill during the payment process, or prior to paying may receive the list of goods in the shopping cart, and can authorize the payment with a simple press of a button or touchscreen. The authorization of the customer may also be carried out by using a computer, such as a tablet computer with a touchscreen, built into or mounted to the shopping cart. The customer may authorize himself before the shopping process, as non-limiting examples only, with an electronic ID, an online account such as a Google account, his/her credit card data (and optionally a PIN code), or internet payment accounts such as, for example, Paypal or the German service Clickandbuy. There might also be an authorization by a connection with the customer's mobile phone involving the mobile communication provider.

Generally, the reliability and versatility of the product identification process is provided, according to embodiments, by the following general aspects of systems and methods. The loading volume of the shopping cart is supervised by an optical camera mounted to the body of the shopping cart, which is connected to a computer having a central processing unit (CPU) and an internal memory. A software is running on the computer and processes the images transmitted from the at least one optical camera. Optionally, one or two further optical cameras also supervise the shopping cart from a different perspective, so that the computer is fed with images of the products in the shopping cart from two or three different viewing angles.

The software comprises an image processing and recognition software, which is adapted to determine products in the images by analyzing the image information and by attributing defined image areas to a single product (herein also called item). Information extracted from the optical camera images is then compared to product specific information, called signature data, from a database which is stored in the memory of the computer. This database comprises previously derived information (signature data) about each product of the assortment of products of the retail environment, for example a super market, in which the system and methods according to embodiments are employed. Typically, this database may comprise from about 30.000 to about 100.000 different products.

In embodiments, various features and measures are employed to provide a high reliability of the recognition process of products in the shopping cart, while at the same time delivering a reasonable average recognition time for each item. This is due to the fact that the recognition under the given circumstances is a relatively difficult task - on the one hand, the number of products in the database, to which the current images of the optical camera have to be compared, is up to 100.000 and thus very high, opening possibility for errors as well as requiring a long computation time. On the other hand, firstly the product has to be reliably identified in the image of the whole shopping cart, and the product may be partly obscured by other products, and its position is typically such that only some sides are visible for the optical camera or optical cameras. Thus, in the database, images from several sides of each product are provided, such that a view from any external viewing perspective on the product is reproducible from the images in the database. For example, if the product has a typical cuboid shape, images taken from a normal direction to each of the six sides are provided - from left, right, front, rear, top and down. Thereby, the complete image database is typically not provided in the computer of the shopping cart, but on a server in a backoffice. In the memory of the computer of the shopping cart, only data derived from the original high resolution images of each product is stored as so called signature data. Depending on the memory size of the computer on the shopping cart, the entire database may also be stored on this computer.

In order to speed up and improve the recognition process, additional parameters for each product are provided in the database in embodiments. These may for example comprise a bar code present on the product, and also information about text printed on the surfaces of the product.

If a product is added to the shopping cart, an optional movement sensor may give a signal to the computer, so that the image identification process is started. The software then compares a current image of the shopping cart with the previous image before the new product was added. The calculated delta in the comparison yields the partial image exhibiting the newly added product(s). The software then searches if a bar code is visible in the partial image and if so, directly identifies the product in the database. In a second optional step, text information is identified in the partial image by image recognition. A character recognition process (OCR) is carried out and the yielded text is compared to entries in the database. This will in many cases directly lead to the identification of the product in the database. If none of the above steps is successful, for example, if the barcode is obstructed and the product is in a position and orientation where only little or no text information is present in the partial image, a recognition based on the image information is started. In order to speed up the recognition and to minimize memory use and processing time required, the recognition is carried out by comparing so called signature data calculated form the partial image with respective signature data stored in the database.

This signature data may in embodiments comprise a variety of different parameters for each product. These are provided in the database and are typically calculated offline when a product is added to the database, typically when it is added to the assortment of products of the retail environment. Also, if the appearance of a product is altered, for example, shape, size, colors, and text information printed thereon, the product is (in an offline-process) again entered into the database, respectively its entry is modified.

The various possible signature data parameters may, as non-limiting examples, include: A value indicating the volume of a product; a value about at least one outer dimension of a product; a value representative of the geometrical shape of a product; a value representative of geometrical relations of a product, preferably a relation between at least two of width, height and length; a set of at least two values related to colors of a product, a set of values related to the area which at least one specific color takes up in a product, the percentage that areas with a certain color take up with respect to at least one side of the outer surface of the product; data related to the color taking up the biggest fraction, optionally the second biggest fraction, etc. of at least one side of the outer surface of the product. It is understood that further parameters may be employed or added to the product recognition process, which are regarded to fall under the scope of the present disclosure.

In the database, one or all of the above parameters may be stored as signature data for each product in the database. Thus, the software may be adapted to use one, several or all of the above parameters for the identification of the newly added product. This may be carried out by sequentially calculating and comparing the individual parameters with the database, until a match with the signatures of a product in the database has been found. Thereby, a confidentiality interval may be defined defining how many parameters of a product have to individually match with an entry in the database as a prerequisite for the decision of the software that the product is regarded as identified.

Once the product is identified, it is stored in a list in the memory of the computer. The computer may be a tablet computer mounted to the shopping cart. The price of the added product is added to the sum which has to be paid at checkout. When the customer has finished the shopping process and goes to the checkout, the sum is transmitted to a payment and authorization process, which was described above.

### Detailed Description of the Embodiments

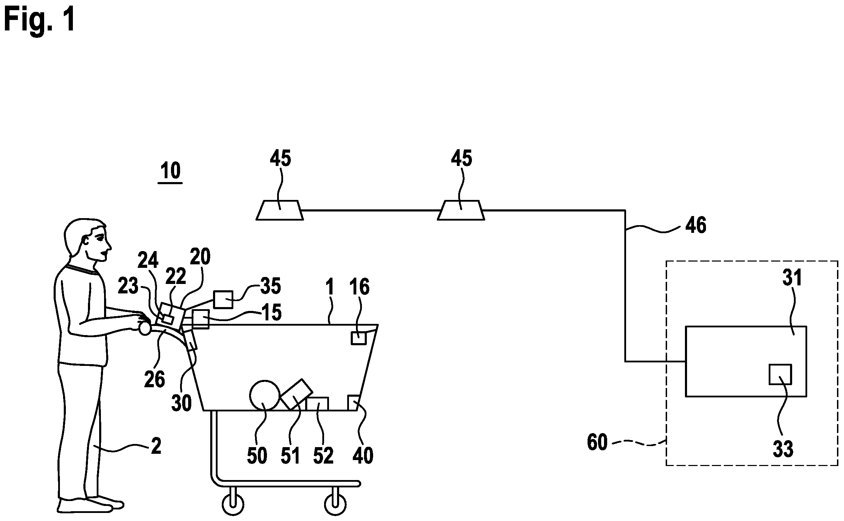

Fig. 1 shows an exemplary shopping cart 1 with components of the system 10 according to embodiments, and the components of the system which are external to the shopping cart. Two optical cameras 15, 16 are mounted to the shopping cart 1 and are connected to the computer 20. The database 22 comprising product information, in the form of signature data and/or reduced image data, is stored in a memory 24 of the computer. The system 10 may optionally comprise a server 31 external to the shopping cart 1. The complete database 33 with high resolution image data on each product of the assortment of products may be provided on the server 31, in this case only signature data and reduced image data on each product is stored in the memory 24 of the computer 20. If the computer 20 has enough memory and computing power, the complete image information database 33 may also be stored in the computer 20 of the shopping cart 1.

While one optical camera 15 may be sufficient in certain configurations or with small shopping carts 1, a second optical camera 16 and even third optical camera may be typically provided in order to improve the recognition process. Two optical cameras 15, 16 may for example be provided at both ends of the handle 26 of the shopping cart, left and right to the computer 20 mounted in the area of the middle of the handle 26. In the embodiment shown, one optical camera 15 is provided at the handle, and the second optical camera 16 at the opposite end of the shopping cart 1, distant from the typical position of the customer 2 at the cart.

Optionally, a barcode scanner device 30 is mounted to the cart. The barcode scanning function may typically be integrated in the software 23 in the memory 24 of the computer 20, and the barcode recognition may also be carried out by analyzing the optical camera image data for respective bar code information.

In embodiments, an additional infrared camera 35 may be provided for supervising the shopping cart 1. The software 23 can be adapted to calculate temperature related data of products in the shopping cart from obtained infrared images. A further optical camera (not shown) may be provided on a lower side of the main compartment of the shopping cart 1, in order to supervise the storing compartment intended for huge goods (bottom-of-the-basket), which is often provided below the main compartment.

The software 23 may be adapted to identify at least one surface temperature of a newly added or any product in the shopping cart 1 from infrared images taken. The temperature is used as auxiliary information, in conjunction with typical product temperatures in the shopping environment stored in the database 22, in the recognition process. This may be used as further signature data to identify products from a fridge or freezer, whereby the temperature serves to differentiate between the two and between normal room temperature. Further, the software can be adapted to recognize areas of varying temperature on a product, and to recognize if a varying temperature distribution is due to a recent temperature imprint from a hand of a human. This information can be used as additional information to the optical images, to determine if a product was recently added to the shopping cart 1.

Further, the system 10 can have a location subsystem which comprises a sensor 40 for obtaining information about the location of the shopping cart 1 in the retail environment. The sensor may be an RFID sensor, for example, which receives signals from antennas 45 distributed over the retail environment, which may be connected to the server 31 wirelessly or via a cable system 46. It is understood that the location subsystem may be employed by various methods known in the art, for example infrared, using additional data from a WIFI system, infrared data, direction finding, etc. The information about the current position may be used for various purposes in embodiments. In embodiments, the database may comprise information about the storing location of each product in the shopping environment. This is used in conjunction with the current location of the shopping cart 1 to determine a limited choice / group of products from the database 22, to which a product 50, 51, 52 newly added to the shopping cart 1 is compared by the software 23 in a first approach of the identification process.

Also, the database 22 may comprise information which indicates, for a number of locations in the retail environment, which products have often been added to the shopping cart 1 at the respective locations in the past. This information is used in conjunction with the actual location of the shopping cart 1 to determine a limited choice of products from the database to which a product newly added to the shopping cart 1 is compared by the software 23 in a first approach of the identification process.

For the product identification process, the database may also comprise information about the colors of a product as signature data. In the identification process, the color data of a newly added product is derived from optical images of the product by reducing the image information by an algorithm This may comprise rasterization of the images, reducing the resolution of the rasterization, calculating characteristic color signatures or color tables for a product and/or for different sides of a product. Thus, characteristic signature information about colors may be stored in the database and may be obtained by the computer in the identification process.

The product identification process is typically further assisted by using data from the infrared camera. When a product is added to the shopping cart, data from the infrared camera can be analyzed by the software for the thermal imprint of a human hand, which will typically show as locally enhanced temperature for products generally having room temperature or lower. Thus, newly added products can be identified by analyzing infrared images, respectively this data may be combined with data from the image recognition process described further above. Thereby, the temperature distribution on the respective product may further be used to estimate, for example, how long the customer carried the product, which may be taken as an indicator - at least as an approximation - in which distance from the cart the product was grabbed. This may in turn be used to delimit the range of products in which is searched - as the products are stored with their location in the shop in the database 22 on computer 20 - to improve product recognition. To decide on the possible distance over which the product was carried to the cart, also the average walking speed of the customer during shopping may be accounted for. Images from the infrared camera may also be used to recognize if a person different from the customer puts a product into the cart, by discerning between the spectra of the infrared emissions of a hand in an image. Then, a signal may be displayed or a sound message may be played like "Attention, not your shopping cart" or the like.

A typical method for the identification of products according to embodiments is as follows: Beforehand, the database with product specific data related to all products of the assortment of products in the retail environment is provided. Thereby, images are taken and stored in the database 33, and the signature information is calculated for each product. The shopping cart 1 is continuously observed with the optical camera(s) 15, 16 and/or the movement sensor. Newly added products are identified in the shopping cart by the image recognition software, which is adapted for identifying between different products in the shopping cart by determining the image areas belonging to a product and attributing the image areas to it. From that partial image, product specific information (signature data) is calculated from the optical data of the partial image. This signature information is compared with signature data from the database 22.

When the software has identified that a new product was added to the shopping cart, typically the search for barcode information in the partial image is carried out as one of the first method steps for the product identification. Subsequently, an optical character recognition is carried out on the partial image which was identified as belonging to the last added product. The extracted text information, if any, is then compared to signature data in the database 22 in order to identify the product via text printed on its surface. Thereby, text printed in larger fonts can be typically used first for the search, as this has a greater chance to be indicative of the product type indicated by brand name and/or product name. If there is a match in the database with identified text, a cross-check may be conducted by the software using other signature data, for example about product size or other parameters described herein. If both the barcode search and the OCR do not yield a result regarded to be reliable via a cross-check, the software starts to calculate signature data from the optical camera image and compares it with the database 22. "Reliable" can for example be defined such that a defined number of different parameters of signature data are all within a 90% match with stored signature data in the database 22.

Optionally, at least one auxiliary information from at least one further sensing device, apart from the optical camera(s) 15, 16 and barcode scanner device 30, may be used for improving the accuracy and/or speed of identification of products in the database 22. For this, images from an infrared camera 35 may be used as was described further above, to obtain signature data about the temperature of the product. The infrared camera 35 may also be used, optionally in conjunction with the movement sensor, to detect that a human hand is moved into the shopping cart, which may be used as an indicator for a product being added or removed. This may be combined with data from the optical camera.

The product specific signature data in the data base may typically comprise at least signature data obtained from the optical camera images beforehand; text phrases on the outside of the product, preferably attributed to specific side surfaces of the product; data about typical surface temperatures of the products; and optionally data about natural radiation of a product, which may optionally be used as additional signature data which is compared with data from an optional radiation sensor.

Thereby, the signature data stored in the data base may typically comprise the following parameters: a value indicating the volume of a product; a value about at least one outer dimension of a product; a value representative of the geometrical shape of a product; a value representative of geometrical relations of a product, preferably a relation between at least two of width, height and length; a set of at least two values related to colors of a product, set of values related to the area which at least one specific color takes up in a product, the percentage that areas with a certain color take up with respect to at least one side of the outer surface of the product; and data related to the color taking up the biggest fraction, optionally the second biggest fraction, etc. of at least one side of the outer surface of the product. The signature data may further comprise data about acoustical properties of the product, such as a sound when the product is put into a cart and hits various other products. Therefore, a microphone may be used to record sounds in the shopping cart as additional identification information.

Also, the signature data may comprise data obtained by a fast fourier transformation (FFT) of parts or the complete image data from the optical camera. For example, this may be an FFT of a line of the image parallel to and in a certain distance from (identified by the image recognition software) edges of one surface of the product, for example 1 cm, or 2 cm, or in the middle of the surface between two identified edges. This FFT data yields a characteristic signature data for the optical appearance of the product and is highly individual for each product. The respective data has to be stored in the database 22, typically at least one FFT-obtained value for each side of the products, such that a comparison can be made for identification. It is understood that this feature may be greatly modified, while those modifications are regarded to fall under the disclosure herein. If the barcode recognition, the OCR recognition and the signature data search using all parameters that are utilized by the software as signature data (as described above) have all not yielded a result regarded as reliable, the optical camera images, or partial image for the product in question, are sent to the server 31 via, e.g., WIFI (WLAN) or another communication technology. The server 31 typically comprises a complete image database 33 with high resolution images of the assortment of products of the retail environment. On the server, a search is then carried out using the high resolution images. If even this fails, the process is transmitted to a human operator. The resulting options are described further above and below, usually the operator may solve the problem at his own computer, only as a last resort he may go to the shopping cart with the problematic unidentified product.

For products which are sold by calculating the weight of an amount picked by the customer, for example fruits and vegetables provided loosely in boxes, a weighing device is provided at the cart. This may be a typical small scale, roughly similar to the type used for home cooking purposes. It may be attached to the upper rim of the cart, for example. The scale may also be realized with a hook on which a plastic bag with the goods has to be placed for weighing, wherein the customer can choose on the display of the computer between various items, such that the price can be determined by the computer employing the scale-provided weight data. It would also be possible to have the customer weigh the goods on a stationary scale, which then prints an adhesive label with a bar code or another machine-readable code, which the customer can attach to the plastic bag with the vegetables/fruits and which may be read by the software of the computer.

The identification process may further comprise obtaining information about the location of the shopping cart 1 in the retail environment, using hardware as described further above. In the database, information about the typical storing location of products in the retail environment may then be used in conjunction with the current location of the shopping cart to determine a limited choice of products from the database, to which a product newly added to the shopping cart is compared in a first approach.

Additionally, the database may contain information about which products are often added by customers to the shopping cart at the respective locations, which is then used in conjunction with the actual location of the shopping cart to determine a limited choice of products from the database to which a product newly added to the shopping cart is compared by the software in a first approach. While the former is based on the average customer, the computer may also comprise data in a database in its memory about prior shopping activities of the current customer logged in to the computer 20. Thus, the computer may for example indicate to the customer, typically on the screen of the computer 20, that he has formerly added a certain product to the shopping cart 1 at the current location in the shop. This information may also contain a hint that a previously bought product was reduced in price, or that there is a special offer about that product. Also the previously bought number of the respective product may be indicated. It is understood that the location data concerning the shopping cart, in conjunction with information about customer shopping habits, may be used for a wide variety of marketing tools in the shopping process. The computer may for example indicate that the customer has usually bought a certain product - e,g., a certain pasta sauce - in conjunction with the choice of another product the customer has just put into the shopping cart, e.g. spaghetti. If the customer agrees by clicking "ok" on a touchscreen of the computer 20, for example, he might also be guided by a map of the shop displayed on the computer screen to the specific product location. That is, generally the computer indicates which other product(s) might be bought, or might be added to the current shopping list entered by the customer - which, if the recommendations fit the customer's needs at least in a number of cases, can be a significant benefit for the merchant by emotionally binding the customer to his business and also by fostering sales.

Another mechanism is the above recommendation mechanism in conjunction with a database different from the one run by the retail environment. For example, the computer 20 may be connected via a WIFI (WLAN) over the server 31 to the internet and to large consumer behavior databases like the bonus systems run by joint organizations of large retail companies. The customer specific data, if present in such a database, opens a variety of options for recommendations based on the individual shopping habits, similar to the recommendation process described above.

The location data may also be used to guide the customer, on the basis of a shopping list he has entered in the system, in an optimized path through the retail environment. The computer 20 may also be adapted to show special offers, to recommend products to the customer based on his previous shopping behavior, and the like. It may also be used to guide the customer if he searches a certain product. Also, previous shopping lists may be displayed, and the delta to the actual list entered by the customer may be calculated and shown. The products already in the shopping cart 1 may be displayed on a list on the computer, and the current sum to be paid can be displayed. If the identification of a product fails, the computer 20 may send a signal wirelessly to staff of the shop. In order to identify the failed product, an augmented reality view of the cart may be displayed on the computer, and the respective product 50, 51, 52 may be marked in color thereon, or the like. The staff can then manually enter the product code or use a barcode scanner device. Subsequently, there may be an optical signal like a blinking LED on the shopping cart to indicate to staff where a failure occurred. The personnel may then also regard a video of about 5 to 20 seconds length on the screen of computer 20, which shows events before and after the product identification failure occurred, which is typically centered around the addition of a product to the shopping cart. The staff can then manually enter the product code or use the barcode scanner, or the like. Alternatively, the failure may be signaled by the computer 20 of the shopping cart 1 to a control person in a back-office, which can carry out the formerly described activities on a screen of his own personal computer. He may for example remotely log on to the computer 20 of the respective problem-causing shopping cart 1, view the video, and may manually intervene by identifying the product in the video himself and to type a product number into his own computer, or by walking towards the customer and to solve the issue at the computer of the shopping cart. This may even happen without any interaction with the customer.

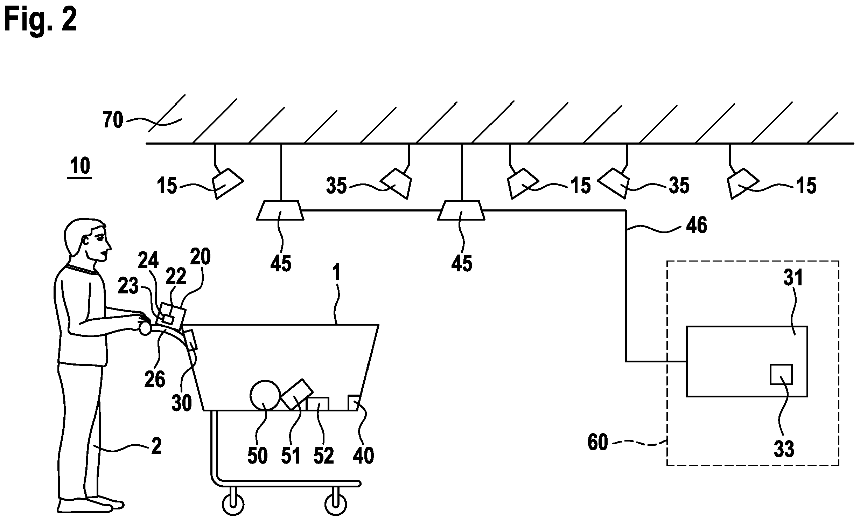

In the embodiments described above, the optical camera(s), infrared camera, movement sensor(s), and barcode scanning device are mounted to the shopping cart or at the shopping cart. Also, the computer, such as a tablet computer or generally a typical single-board computer (SBC), is mounted at the shopping cart, while a server having the complete image data base is typically provided in a backoffice or the like. In other embodiments, such as schematically shown in Fig. 2 and which may be combined with other embodiments described herein, a plurality of optical cameras 15 and/or a plurality of infrared cameras 35 (both only exemplarily and schematically shown in Fig. 2) are mounted stationary in the retail environment, for example at a ceiling 70, and/or at walls and/or pillars. The computer at each shopping cart may in this case be replaced by a central computer or server 31 in the backoffice 60, the computer at the shopping cart may however also be used for interaction with the customer, about his shopping list and items in the cart, for example, and may thus be operably connected at the cart such as in Fig. 1. In the embodiment, the optical and infrared cameras are distributed over the area of the retail environment such that typically, a shopping cart is in the field of view of at least one optical camera, or preferably two or more optical cameras, regardless of the cart's position in the retail environment. Alternatively, the optical cameras may be stationary, while the infrared cameras are mounted to the carts, or vice versa. It is understood that the skilled person may derive a number of variations of the embodiments described, in particular with respect to variations of the placing of the various cameras, which are regarded to fall into the scope of this disclosure.

The method of recognition of products is, apart from the above differences of the placing and location of the components of the recognition system, basically the same as in the previous embodiments. Differently, the products may already be supervised by the stationary optical cameras when they are taken from the shelf, whereby the location in the shelf may be used in conjunction with previously obtained data - or data stored in a location part of the database in the server - to delimit the range of products with which the chosen product has to be compared in the image recognition process. It goes without saying that the skilled person will be able to derive further variations from the described embodiments, which are regarded to fall within the scope of this disclosure.

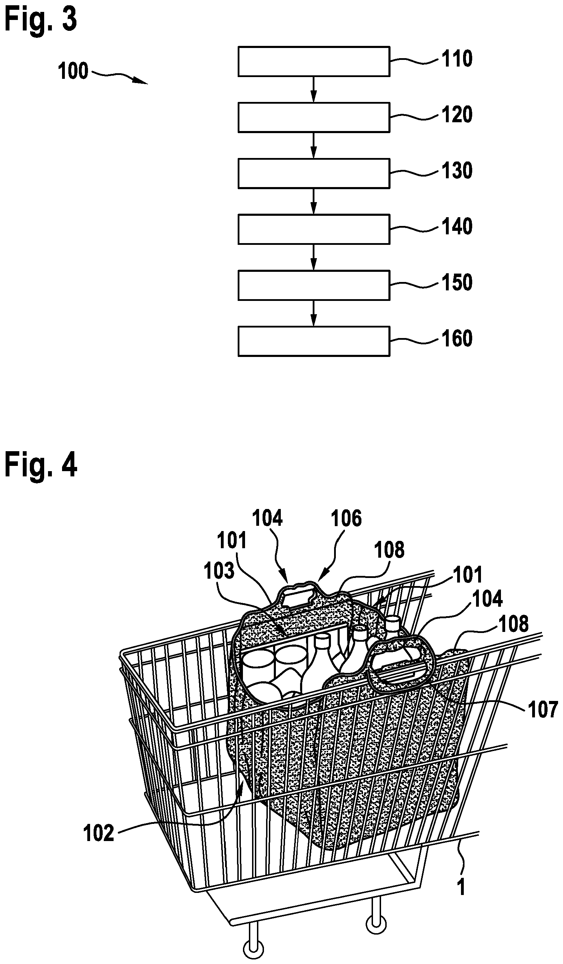

Fig. 3 shows a method 100 for the identification of products in a shopping cart in a retail environment according to embodiments. The method comprises: Providing a system as described with respect to Fig. 1 or Fig. 2 in a block 110; Providing a database with product specific signature data related to products of the assortment of products in the retail environment in a block 120; monitoring the shopping cart with an optical camera and optionally a movement sensor in a block 130; identifying products in the shopping cart, by an image recognition software adapted for discerning between different products in the shopping cart, by identifying an image area and attributing it to a product, and to calculate signature data from the optical data of the attributed image area in a block 140; comparing the calculated signature data with signature data in the database in a block 150; and using at least one auxiliary information from at least one further sensing device for improving the accuracy and/or speed of identification of products in the data base in a block 160.

In embodiments, there may also be an age verification method which gives a first approach if a minor wants to buy goods to which he is not entitled to. This applies particularly to alcohol and tobacco products, but depending on national or state legislation, also other products may be affected. Thereby, an optical camera 15 (like in Fig. 2) takes a picture of every customer - or only when needed - and therefrom, his/her height is estimated by an analysis of the image data by the software. This may typically, but not necessarily, be carried out in a centralized computer such as server 31. If certain values - which may also, e.g., include the body outline and therefor the estimated weight of the person - is below a certain threshold, it is assumed that the person may be a minor. Thus, if this person puts a restricted item like an alcoholic beverage into the cart, there may be a signal to the staff to intervene manually, or similar measures which may also be fully automated. Also, the picture of the person may only be taken once a potentially restricted item is put into the cart and recognized, which follows a stricter approach with respect to data protection and privacy.

In embodiments, the at least further sensing device, additional to the optical camera, comprises at least one of a barcode scanner device, and a movement sensor.

Further, the at least one further sensing device may comprise a sensor for obtaining information about the location of the shopping cart in the retail environment.

The database in the computer of the shopping cart may in embodiments comprise information about the storing location of products in the shopping environment. This can be used in conjunction with the current location of the shopping cart to determine a limited choice of products from the database, to which a product newly added to the shopping cart is compared by the software in a first approach of an identification process. Further, the data base may comprise information which indicates, for a number of locations in the retail environment, which products are often added to the shopping cart at the respective locations, which is used in conjunction with the actual location of the shopping cart to determine a limited choice of products from the database to which a product newly added to the shopping cart is compared by the software in, for example, a first approach of an identification process.

The database may further also comprise information about the colors of a product, respectively the color palette, which is derived from optical images of the product by reducing the image information by an algorithm. This process may comprise rasterization of the images, reducing the resolution of the rasterization, calculating characteristic color signatures or color tables for a product and/or for different sides of a product.

In embodiments, the system may further be configured to recognize that a product is newly added to the shopping cart and that is subsequently removed from the shopping cart.

Fig. 4 shows a shopping cart 1 as employed in embodiments, wherein the shopping cart 1 comprises at least one extra compartment. The compartment is typically realized as a bag 101. The bag 101 or several such bags are, for example, mounted to an upper rim of the shopping cart. The bag 101 comprises a container body 102, which is typically made of flexible material, such as (synthetic) fabric or the like, and has a mouth or inlet 103. It may have grip elements 104 on mutually opposite edges. The grip elements 104 have an elongated bar 108, from which a handle 106 protrudes upwardly and, laterally, a wing 107, which can straddle the edge (upper rim) of the cart 101. The wing thus works as a suspension element for the bag 101. Optionally, closure means may be provided on the grip elements 104, constituted by hook-shaped portions (not shown) formed on the grip elements 104, for example. It is also possible to provide buttons, a zip fastener or any other element that allows to provide a detachable connection. Once removed from the cart, the bag can be closed easily, by utilizing the presence of the hook-like element provided on the handle, which mates within a seat (not shown) formed on the opposite handle. The cameras etc. as of Fig. 1 are not shown in Figs. 4, 5, and 6 for illustrational purposes only.

The bag 101 serves, on the one hand, the purpose that once the customer has paid at checkout - which procedure is described above - he may remove the bag or bags from the shopping cart 1, which spares the effort of reloading the bought items into own bags as done conventionally. Also, the customer may roll the shopping cart to the parking lot and conveniently take the bags out and load them into his parking car.

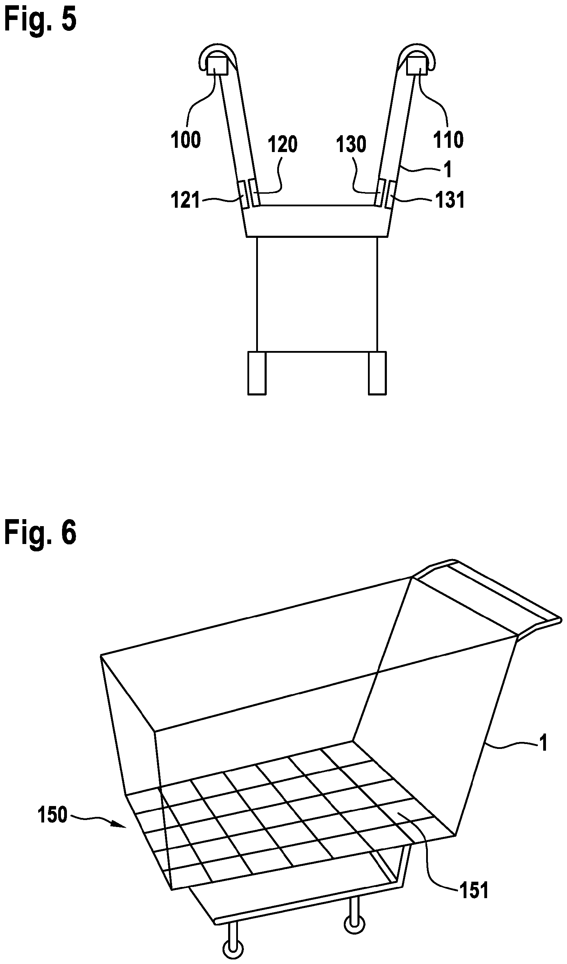

In embodiments shown in Fig. 5, the bag 101 serves a further purpose. Thereby, the bag is supported by at least one weight sensor 100. Typically, it is supported by at least two weight sensors 100, 110 which are attached in the vicinity of, or directly at, an upper rim of the shopping cart 1. The sensor(s) may be attached to the upper rim of the metal frame of the shopping cart, for example. As the bag is fully supported at the at least two sensors 100, 110, which are connected to the computer 20, the weight of the bag may be continuously monitored. Thus, when the addition of an item to the shopping cart is registered by the computer 20 via, for example, the optical camera 15, the weight of the item can be determined by a comparison before and after. The data about the weight may be used by the computer 20 as an additional parameter for the product identification process, as the weight has a great significance to discern between products which may, for example, share some optical features and are thus difficult to discern with the conventional optical-based method as described further above. Hence, overall identification accuracy can be further enhanced by using the weight as a further parameter. Thus, this may be added as a method step to the method shown in Fig. 3. It is understood that the bag 101 may in embodiments also have a rigid structure, hence be a box, but have nearly the same dimensions and properties as above.

In order to keep the bags fully opened, so that they allow a maximum viewing angle for the optical camera 15 from above onto the products in the bags, magnets 120, 130 are employed close to lower corners (e.g. at the four lower corners) or edges of the bags as shown in Fig. 4. The magnets may be magnetically attached to counterparts 121, 131 comprising a ferromagnetic material, mounted to the inner side walls - or bottom - of the shopping cart 1. Hence, it is ensured that the bag 101, which typically has a near cubic shape with an open top side, is maximally stretched at all times and does not crumble or fold, which might obstruct the view on at least some items in the bag by the optical camera.

It goes without saying that the skilled person will find further ways of realizing a shopping cart with a weighting function for a bag, which are regarded to fall under the present disclosure.

In further embodiments, the bag 101 comprises a net of thin wires, which are, for example, woven into the fabric. The wires are connected to a battery, for example located in the bottom of the shopping cart 1. Via contacts, which may be integrated in the weight sensors 100, 110 described above, or with the magnets 120, 130, as examples, the wire mesh is subjected to a current and will heat up slightly. Thereby, the resistance of the wires and the battery are adapted such that the wires may heat up for some degrees over ambient temperature, for example from 5 degrees to 25 degrees, more typically from 7 degrees to 15 degrees. When the infrared camera supervises the bag 101 in the shopping cart 1, it will recognize the heated wires clearly, and any product being placed in the bag 101 will obstruct a part of the net of wires. This may be used by the computer 20 as an additional information for product identification. Especially cold products from a refrigerator then produce a clear change of the image provided by the infrared camera.

In further embodiments shown in Fig. 6, the bottom of the shopping cart may be equipped with a pressure-sensing sensor plate 150. The sensor plate, or the individual sensors arranged as the sensor plate, are connected to the computer 20. By checking the signal of the different pressure sensors, which may for example be arranged in a matrix with from 4 x 6, up to 30 x 50 sensors 151 typically covering the whole bottom of the cart, it can be detected where a newly added product has been placed inside the shopping cart. Further, from the quantitative analysis of the sensor signals, the actual weight of a product which was just added may be derived. Thus, consecutively, the weight of each added product may be derived. The weight information can thus be used as additional discriminating information in the product identification process.

Although specific features of various embodiments of the invention may be shown in some drawings and not in others, this is for convenience only. In accordance with the principles of the invention, any feature of a drawing may be referenced and/or claimed in combination with any feature of any other drawing.

The present invention has been described in relation to particular embodiments, which are intended in all respects to be illustrative rather than restrictive.

## Claims

1. A system for the identification of products in a shopping cart in a retail environment, comprising:
- a computer comprising a database with product specific data related to products from an assortment of products in a retail environment;
- a shopping cart;
- at least one optical camera operably connected to the computer, for monitoring the shopping cart;
- a software stored in a memory of the computer, for identifying products in the shopping cart, which comprises an image recognition software adapted for identifying an image area and attributing it to a product, and to calculate signature data from the optical data of the attributed image area;
wherein the product specific data in the database comprises signature data derived from previously obtained optical images of the assortment of products, and wherein the software is adapted to identify a product in the shopping cart by comparing calculated signature data of the product in the shopping cart with signature data in the database,
wherein the software is adapted to use at least one auxiliary information from at least one further sensing device, in order to improve the accuracy and/or speed of identification of products in the shopping cart, and
wherein the at least one optical camera is mounted to the shopping cart;
and wherein the shopping cart comprises a compartment having the function of a scale, which is a bag from textile suspended at weight sensors mounted to the shopping cart, and wherein the system is adapted to use weighting information of added goods for the product identification, and wherein the textile body of the bag has magnets attached to it, so that the bag is maintained at its full volume and kept from crumbling when the magnets are attached to counterparts attached to the shopping cart.

2. The system of claim 1, wherein the at least one further sensing device comprises an infrared camera for obtaining infrared images of the shopping cart, and wherein the software is adapted to calculate temperature related data of products in the shopping cart from the infrared images.

3. The system of claims 1 or 2, wherein the software is adapted to recognize that a product is newly added to the shopping cart or removed from the shopping cart.

4. The system of any of claims 1 to 3, wherein the further sensing device, in particular an infrared camera, is mounted to at least one of: the shopping cart, a ceiling of the retail environment, a wall of the retail environment, a pillar in the retail environment.

5. The system of claim 4, wherein the software is adapted to identify at least one surface temperature of a product from an infrared image, and to use the temperature as auxiliary information, in conjunction with typical product temperatures in the shopping environment stored as signature data in the database, in the recognition process.

6. The system of claim 5, wherein the software is adapted to recognize areas of varying temperature on an item, and to recognize if a varying temperature distribution is due to a temperature imprint from a hand of a human, and to use this information to determine if a product was recently added to the shopping cart.

7. The system of any preceding claim, wherein the shopping cart comprises a pressure-sensing sensor plate, and wherein the sensor data from the sensor plate is used in the product identification process.

8. A method for the identification of products in a shopping cart in a retail environment, the method comprising:
- Providing a system according to any of claims 1 to 7 (100);
- Providing a database with product specific signature data related to products of the assortment of products in the retail environment (110);
- monitoring the shopping cart with an optical camera mounted to the shopping cart and optionally a movement sensor (120);
- identifying products in the shopping cart, by an image recognition software adapted for discerning between different products in the shopping cart, by identifying an image area and attributing it to a product, and to calculate signature data from the optical data of the attributed image area (130);
- comparing the calculated signature data with signature data in the database (140);
- using at least one auxiliary information from at least one further sensing device for improving the accuracy and/or speed of identification of products in the data base (140), in that the shopping cart comprises a compartment having the function of a scale, which is a bag from textile suspended at weight sensors mounted to the shopping cart, and wherein the system is adapted to use weighting information of added goods for the product identification, and wherein the textile body of the bag has magnets attached to it, so that the bag is maintained at its full volume and kept from crumbling when the magnets are attached to counterparts attached to the shopping cart.

9. The method of claim 8, further comprising: identifying a barcode in the image area attributed to a product, either via carrying out an image recognition on the image area, or by employing a barcode scanner device.

10. The method of claim 8 or 9, further comprising: identifying, when a product is added to the shopping cart, the weight of the product by employing a sensor plate, or by employing weight sensors to which a bag in the shopping cart is suspended.

11. The method of claims 8 to 10, further comprising carrying out an OCR on the image area attributed to a product to obtain signature data comprising text information.

12. The method of any of claim 8 to 11, wherein the product specific signature data in the database comprises at least one of the following:
a. optical camera images of the products;
b. signature data obtained from optical camera images of the product;
c. data about typical surface temperatures of the products;
d. weight data of products;
e. data about radioactive radiation of a product.

13. The method of any of claims 8 to 12, wherein the product specific signature data comprises:
a. text phrases on the outside of the product, preferably attributed to specific side surfaces of the product, optionally with attributed respective font sizes;
b. a value indicating the volume of a product;
c. a value about at least one outer dimension of a product;
d. a value representative of the geometrical shape of a product;
e. a value representative of geometrical relations of a product, preferably a relation between at least two of width, height and length;
f. a set of at least two values related to colors of a product,
g. a set of values related to the area which at least one specific color takes up in a product,
h. the percentage that areas with a certain color take up with respect to at least one side of the outer surface of the product;
i. data related to the color taking up the biggest fraction, optionally the second biggest fraction, etc. of at least one side of the outer surface of the product;
j. a value for the weight of a product.

## Patentansprüche

1. System zur Identifizierung von Produkten in einem Einkaufswagen in einer Einzelhandelsumgebung, umfassend:
- einen Computer, der eine Datenbank mit produktspezifischen Daten umfasst, die sich auf Produkte aus einem Sortiment von Produkten in einer Einzelhandelsumgebung beziehen;
- mindestens eine optische Kamera, die betriebsfähig mit dem Computer verbunden ist, zur Überwachung des Einkaufswagens;
- eine in einem Speicher des Computers gespeicherte Software zum Identifizieren von Produkten in dem Einkaufswagen, die eine Bilderkennungssoftware aufweist, die dazu geeignet ist, eine Bildfläche zu identifizieren und sie einem Produkt zuzuordnen, und Signaturdaten aus den optischen Daten der zugeordneten Bildfläche zu berechnen;
wobei die produktspezifischen Daten in der Datenbank Signaturdaten aufweisen, die von zuvor erhaltenen optischen Bildern des Produktsortiments abgeleitet sind,
und wobei die Software so angepasst ist, dass sie ein Produkt in dem Einkaufswagen identifiziert, indem sie berechnete Signaturdaten des Produkts in dem Einkaufswagen mit Signaturdaten in der Datenbank vergleicht,
wobei die Software so angepasst ist, dass sie mindestens eine Zusatzinformation von mindestens einer Sensorvorrichtung verwendet, um die Genauigkeit und/oder Geschwindigkeit der Identifizierung von Produkten im Einkaufswagen zu verbessern, und
wobei die mindestens eine optische Kamera an dem Einkaufswagen angebracht ist;
und wobei der Einkaufswagen ein Fach mit der Funktion einer Waage aufweist, das ein Beutel aus Textil ist, der an Gewichtssensoren aufgehängt ist, die an dem Einkaufswagen angebracht sind, und wobei das System angepasst ist, um Gewichtsinformationen von hinzugefügten Waren für die Produktidentifikation zu verwenden, und wobei der Textilkörper des Beutels Magnete aufweist, die an ihm angebracht sind, so dass der Beutel in seinem vollen Volumen gehalten und vor dem Zusammenfallen bewahrt wird, wenn die Magnete an Gegenstücken angebracht sind, die an dem Einkaufswagen angebracht sind.

2. System nach Anspruch 1, wobei die mindestens eine weitere Sensorvorrichtung eine Infrarotkamera umfasst, um Infrarotbilder des Einkaufswagens zu erhalten, und wobei die Software so angepasst ist, dass sie temperaturbezogene Daten von Produkten im Einkaufswagen aus den Infrarotbildern berechnet.

3. System nach Anspruch 1 oder 2, wobei die Software so angepasst ist, dass sie erkennt, dass ein Produkt neu in den Einkaufswagen hinzugefügt oder aus dem Einkaufswagen entfernt wurde.

4. System nach einem der Ansprüche 1 bis 3, wobei die weitere Sensorvorrichtung, insbesondere eine Infrarotkamera, an mindestens einem von Folgendem angebracht ist: einem Einkaufswagen, einer Decke der Einzelhandelsumgebung, einer Wand der Einzelhandelsumgebung, oder einer Säule in der Einzelhandelsumgebung.

5. System nach Anspruch 4, wobei die Software angepasst ist, um mindestens eine Oberflächentemperatur eines Produkts aus einem Infrarotbild zu identifizieren, und die Temperatur als Zusatzinformation in Verbindung mit typischen Produkttemperaturen in der Einkaufsumgebung, die als Signaturdaten in der Datenbank gespeichert sind, im Erkennungsprozess zu verwenden.

6. System nach Anspruch 5, wobei die Software so angepasst ist, dass sie Flächen mit variierender Temperatur auf einem Artikel erkennt, und erkennt, ob eine variierende Temperaturverteilung auf einen Temperaturabdruck von einer Hand eines Menschen zurückzuführen ist, und dass sie diese Information verwendet, um festzustellen, ob ein Produkt kürzlich in den Einkaufswagen gelegt wurde.

7. System nach einem der vorhergehenden Ansprüche, wobei der Einkaufswagen eine druckempfindliche Sensorplatte umfasst, und wobei die Sensordaten von der Sensorplatte in dem Produktidentifikationsprozess verwendet werden.

8. Verfahren zur Identifizierung von Produkten in einem Einkaufswagen in einer Einzelhandelsumgebung, wobei das Verfahren umfasst:
- Bereitstellen eines Systems nach einem der Ansprüche 1 bis 7 (100);
- Bereitstellen einer Datenbank mit produktspezifischen Signaturdaten, die sich auf die Produkte des Warensortiments in der Einzelhandelsumgebung beziehen (110);
- Überwachen des Einkaufswagens mit einer am Einkaufswagen angebrachten optischen Kamera und optional einem Bewegungssensor (120);
- Identifizieren von Produkten in dem Einkaufswagen durch eine Bilderkennungssoftware, die angepasst ist, um zwischen verschiedenen Produkten in dem Einkaufswagen zu unterscheiden, indem eine Bildfläche identifiziert und einem Produkt zugeordnet wird, und um Signaturdaten aus den optischen Daten der zugeordneten Bildfläche (130) zu berechnen;
- Vergleichen der berechneten Signaturdaten mit Signaturdaten in der Datenbank (140);
- Verwenden von mindestens einer Zusatzinformation von mindestens einer weiteren Sensorvorrichtung zur Verbesserung der Genauigkeit und/oder Geschwindigkeit der Identifizierung von Produkten in der Datenbank (140), wobei der Einkaufswagen ein Fach mit der Funktion einer Waage aufweist, die eine Tasche aus Textil ist, die an Gewichtssensoren aufgehängt ist, die an dem Einkaufswagen angebracht sind, und wobei das System angepasst ist, um Gewichtsinformationen von hinzugefügten Waren für die Produktidentifizierung zu verwenden, und wobei der Textilkörper der Tasche Magnete aufweist, die an ihm angebracht sind, so dass die Tasche in ihrem vollen Volumen gehalten und vor dem Zusammenfallen bewahrt wird, wenn die Magnete an Gegenstücken angebracht sind, die an dem Einkaufswagen angebracht sind.

9. Verfahren nach Anspruch 8, welches ferner umfasst: Identifizieren eines Barcodes in der Bildfläche, der einem Produkt zugeordnet ist, entweder mittels Durchführung einer Bilderkennung auf der Bildfläche oder durch Verwendung einer Barcode-Scanner Vorrichtung.

10. Verfahren nach Anspruch 8 oder 9, ferner umfassend: Identifizieren, wenn ein Produkt dem Einkaufswagen hinzugefügt wird, des Gewichts des Produkts durch Verwendung einer Sensorplatte, oder durch Verwendung von Gewichtssensoren, an denen eine Tasche im Einkaufswagen aufgehängt ist.

11. Verfahren nach Anspruch 8 bis 10, ferner umfassend: Durchführen einer OCR an der einem Produkt zugeordneten Bildfläche, um Signaturdaten zu erhalten, die Textinformationen umfassen.

12. Verfahren nach einem der Ansprüche 8 bis 11, wobei die produktspezifischen Signaturdaten in der Datenbank mindestens eines der folgenden Merkmale umfassen:
a. optische Kamerabilder der Produkte;
b. Signaturdaten, die aus optischen Kamerabildern des Produkts erhalten werden;
c. Daten über typische Oberflächentemperaturen der Produkte;
d. Gewichtsdaten der Produkte;
e. Daten über die radioaktive Strahlung eines Produkts.

13. Verfahren nach einem der Ansprüche 8 bis 12, wobei die produktspezifischen Signaturdaten umfassen:
a. Textphrasen auf der Außenseite des Produkts, die vorzugsweise bestimmten Seitenflächen des Produkts zugeordnet sind, optional mit zugeordneten jeweiligen Schriftgrößen;
b. einen Wert, der das Volumen eines Produkts angibt;
c. ein Wert über mindestens eine äußere Abmessung eines Produkts;
d. einen Wert, der für die geometrische Form eines Produkts repräsentativ ist;
e. einen Wert, der für die geometrischen Verhältnisse eines Produkts repräsentativ ist, vorzugsweise ein Verhältnis zwischen mindestens zwei von Breite, Höhe und Länge;
f. ein Satz von mindestens zwei Werten, die sich auf die Farben eines Produkts beziehen,
g. eine Reihe von Werten, die sich auf die Fläche beziehen, die mindestens eine bestimmte Farbe in einem Produkt einnimmt,
h. den prozentualen Anteil, den Flächen mit einer bestimmten Farbe in Bezug auf mindestens eine Seite der Außenfläche des Produkts einnehmen;
i. Daten zu der Farbe, die den größten Anteil, optional den zweitgrößten Anteil usw. an mindestens einer Seite der Außenfläche des Produkts einnimmt;
j. einen Wert für das Gewicht eines Produkts.

## Revendications

1. Système destiné à l'identification de produits dans un panier d'achat dans un environnement de vente au détail, comprenant :
- un ordinateur comprenant une base de données avec des données spécifiques de produit liées à des produits d'un assortiment de produits dans un environnement de vente au détail ;
- un panier d'achat ;
- au moins une caméra optique connectée fonctionnellement à l'ordinateur, pour surveiller le panier d'achat ;
- un logiciel stocké dans une mémoire de l'ordinateur, pour identifier des produits dans le panier d'achat, qui comprend un logiciel de reconnaissance d'image adapté pour identifier une zone d'image et l'attribuer à un produit, et pour calculer des données de signature à partir des données optiques de l'image attribuée la zone ;
dans lequel les données spécifiques au produit dans la base de données comprennent des données de signature dérivées d'images optiques précédemment obtenues de l'assortiment de produits, et dans lequel le logiciel est adapté pour identifier un produit dans le panier d'achat en comparant les données de signature calculées du produit dans le panier d'achat avec les données de signature dans la base de données,
dans lequel le logiciel est adapté pour utiliser au moins une information auxiliaire d'au moins un dispositif de détection supplémentaire, afin d'améliorer la précision et/ou la vitesse d'identification des produits dans le panier d'achat, et
dans lequel l'au moins une caméra optique est montée sur le panier d'achat ;
et dans lequel le panier d'achat comprend un compartiment ayant la fonction d'une balance, qui est un sac en textile suspendu à des capteurs de poids montés sur le panier d'achat, et dans lequel le système est adapté pour utiliser des informations de poids de produits ajoutés pour l'identification du produit, et dans lequel le corps textile du sac présente des aimants attachés à celui-ci, de sorte que le sac est maintenu à son plein volume et empêché de céder lorsque les aimants sont attachés à des homologues attachés au panier d'achat.

2. Système selon la revendication 1, dans lequel l'au moins un dispositif de détection supplémentaire comprend une caméra infrarouge pour obtenir des images infrarouges du panier d'achat, et
dans lequel le logiciel est adapté pour calculer des données liées à la température des produits dans le panier d'achat à partir des images infrarouges.

3. Système selon la revendication 1 ou 2, dans lequel le logiciel est adapté pour reconnaître qu'un produit est nouvellement ajouté au panier ou retiré du panier.

4. Système selon l'une quelconque des revendications 1 à 3, dans lequel l'autre dispositif de détection, en particulier une caméra infrarouge, est monté sur : le panier d'achat et/ou un plafond de l'environnement de vente au détail et/ou une paroi de l'environnement de vente au détail et/ou un pilier dans l'environnement de vente au détail.

5. Système selon la revendication 4, dans lequel le logiciel est adapté pour identifier au moins une température de surface d'un produit à partir d'une image infrarouge, et pour utiliser la température comme information auxiliaire, en conjonction avec des températures de produit typiques dans l'environnement d'achat stockées comme données de signature dans la base de données, dans le cadre du processus de reconnaissance.

6. Système selon la revendication 5, dans lequel le logiciel est adapté pour reconnaître des zones de température variable sur un article, et pour reconnaître si une distribution de température variable est due à une empreinte de température d'une main humaine, et pour utiliser ces informations pour déterminer si un produit a été récemment ajouté au panier.

7. Système selon l'une quelconque des revendications précédentes, dans lequel le panier comprend une plaque de détection de pression, et dans lequel les données de capteur provenant de la plaque de capteur sont utilisées dans le processus d'identification de produit.

8. Procédé d'identification de produits dans un panier d'achat dans un environnement de vente au détail, le procédé comprenant :
- la fourniture d'un système selon l'une quelconque des revendications 1 à 7 (100) ;
- la fourniture d'une base de données avec des données de signature spécifiques de produit liées aux produits de l'assortiment de produits dans l'environnement de vente au détail (110) ;
- la surveillance du panier d'achat avec une caméra optique montée sur le panier d'achat et éventuellement un capteur de mouvement (120) ;
- l'identification des produits dans le panier d'achat, par un logiciel de reconnaissance d'image adapté pour discerner différents produits dans le panier d'achat, en identifiant une zone d'image et en l'attribuant à un produit, et pour calculer des données de signature provenant des données optiques de la zone d'image attribuée (130) ;
- la comparaison des données de signature calculées avec les données de signature dans la base de données (140) ;
- l'utilisation d'au moins une information auxiliaire d'au moins un autre dispositif de détection pour améliorer la précision et/ou la vitesse d'identification des produits dans la base de données (140), dans la mesure où le panier comprend un compartiment ayant la fonction d'une balance, qui est un sac en textile suspendu à des capteurs de poids montés sur le panier, et dans lequel le système est adapté pour utiliser les informations de poids de produits ajoutés pour l'identification du produit, et dans lequel le corps textile du sac est pourvu d'aimants, de sorte que le sac est maintenu à son plein volume et empêché de céder lorsque les aimants sont attachés à leurs homologues attachés au panier d'achat.

9. Procédé selon la revendication 8, comprenant en outre : l'identification d'un code à barres dans la zone d'image attribuée à un produit, soit en effectuant une reconnaissance d'image sur la zone d'image, soit en utilisant un dispositif de balayage de code à barres.

10. Procédé selon la revendication 8 ou 9, comprenant en outre : l'identification, lorsqu'un produit est ajouté au panier d'achat, le poids du produit en utilisant une plaque de détection, ou en utilisant des capteurs de poids auxquels un sac dans le panier d'achat est suspendu.

11. Procédé selon les revendications 8 à 10, comprenant en outre la réalisation d'un OCR sur la zone d'image attribuée à un produit pour obtenir des données de signature comprenant des informations textuelles.

12. Procédé selon l'une quelconque des revendications 8 à 11, dans lequel les données de signature spécifiques au produit dans la base de données comprennent :
a. des images par caméra optique des produits ;
b. des données de signature obtenues par des images par caméra optique du produit ;
c. des données sur des températures de surface typiques des produits ;
d. des données de poids des produits ;
e. des données sur un rayonnement radioactif d'un produit.

13. Procédé selon l'une quelconque des revendications 8 à 12, dans lequel les données de signature spécifiques au produit comprennent :
a. des phrases textuelles sur l'extérieur du produit, de préférence attribuées à des surfaces latérales spécifiques du produit, éventuellement avec des tailles de police respectives attribuées ;
b. une valeur indiquant le volume d'un produit ;
c. une valeur autour d'au moins une dimension extérieure d'un produit ;
d. une valeur représentative de la forme géométrique d'un produit ;
e. une valeur représentative des relations géométriques d'un produit, de préférence une relation entre au moins deux éléments parmi largeur, hauteur et longueur ;
f. un ensemble d'au moins deux valeurs liées aux couleurs d'un produit,
g. un ensemble de valeurs liées à la surface qu'occupe au moins une couleur spécifique dans un produit,
h. le pourcentage que les zones d'une certaine couleur occupent par rapport à au moins un côté de la surface extérieure du produit ;
i. des données relatives à la couleur occupant la plus grande fraction, éventuellement la seconde plus grande fraction, etc. d'au moins un côté de la surface extérieure du produit ;
j. une valeur pour le poids d'un produit.
